# EUROPEAN PATENT SPECIFICATION

(11) **EP 0 660 556 B1**
(45) Date of publication and mention of the grant of the patent: **02.04.2003**
(21) Application number: 94203718.5
(22) Date of filing: 21.12.1994
(51) Int. Cl.: H04J 3/14, H04J 3/16, H04L 1/00, H04L 1/22, H04L 1/24, H04L 12/26

(54) **Method for checking data integrity and correctness of interconnections in a cross-connector of an SDH network**
Verfahren zur Prüfung der Datenintegrität und der Fehlerfreiheit von Verbindungsschaltungen in einem Rangierverteiler eines SDH-Netzwerks
Méthode pour contrôler l'intégrité des données et le déroulement correct d'interconnexions d'un dispositif de brassage dans un réseau de type SDH

(30) Priority: 21.12.1993 IT MI932676
(43) Date of publication of application: 28.06.1995
(73) Proprietor: Italtel s.p.a., 20154 Milano (IT); CNX S.p.A., 20126 Milano (IT)
(72) Inventor: Raimondi, Luciano, I-20100 Milano (IT); Bramati, Andrea, I-20060 Pozzo d'Adda ( Mi ) (IT)
(74) Representative: Giustini, Delio

(56) References cited:
- US-A- 5 265 096
- BEHRENS M ET AL: "NK 2000 NETWORK NODE - THE CENTRAL PROCESSING ELEMENT FOR FUTURE TRANSMISSION NETWORKS" PHILIPS TELECOMMUNICATION REVIEW, vol. 50, no. 1, 1 March 1992, pages 61-69, XP000374523
- HOLTER R: "SONET - NEW TECHNOLOGY WITH NEW MANAGEMENT REQUIREMENTS" DISCOVERING A NEW WORLD OF COMMUNICATIONS, CHICAGO, JUNE 14 - 18, 1992 BOUND TOGETHER WITH B0190700, VOL. 3, vol. 4 OF 4, 14 June 1992, INSTITUTE OF ELECTRICAL AND ELECTRONICS ENGINEERS, pages 1810-1814, XP000337999

## Description

### Technical Field

This invention relates to a method to check the integrity of data and the correctness of interconnections in a cross-connector of a digital telecommunication system based on SDH techniques.

The invention finds its application in telecommunication digital systems and in particular in cross connectors of telecommunication systems.

These systems, internationally known as "cross connectors" are used inside communication systems and particularly in nodes of a distributed transmission system.

Functions developed by these cross connectors are the disassembly of incoming transmission flows, switching of the same and the re-assembly at output.

Cross connectors are also suitable to assure the communication reliability. In particular, in case of faults on a first path, the cross connector is capable to seek for alternative paths ad to re-route signals on these paths.

This re-routing is made on the basis of information supplied by a network supervision system at higher hierarchical level.

As a development of the present telecommunication digital networks which foresee a plesiochronous data transmission, a synchronous digital transmission technique has been recently proposed, called SDH (Synchronous Digital Hierarchy). The SDH technique is based on Synchronous Transport Modules STM, meaning for synchronous transport module an information structure capable to support connections at section level in the SDH system.

STM includes section heading fields (SOH) and payload information fields organised in a block structure with a range of 125 µs.

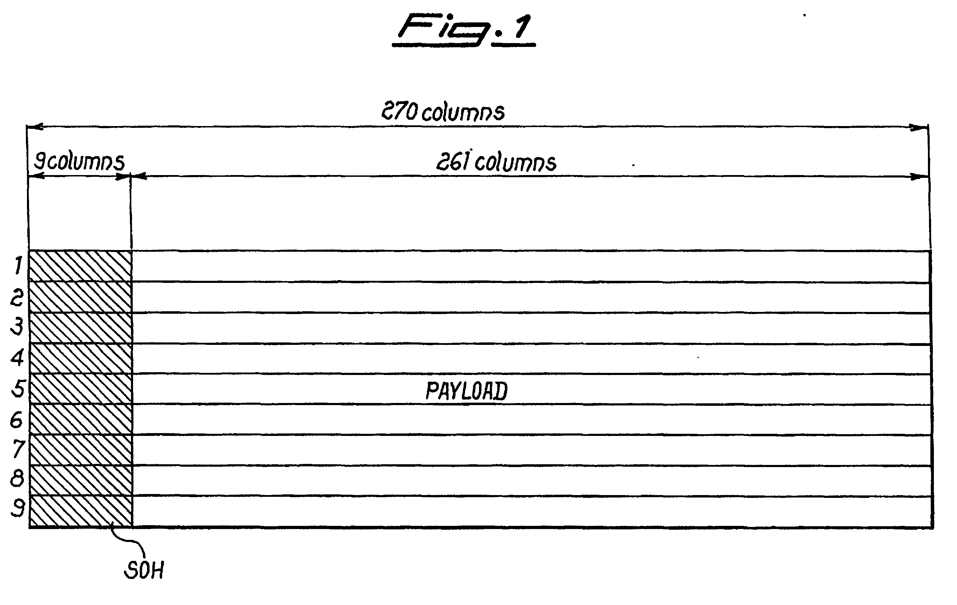

The basic module is defined at a transmission speed or bit rate of 155 Mbit/s and is called STM1. As shown in figure 1, the module frame structure or basic level STM-1 is formed by a 9-line and 270-column matrix whose elements consist of 8-bit bytes, developing line after line, from left to right and from top to bottom. The first 9 columns of the frame contain the section heading fields (SOH), dedicated for instance to the frame alignment, to error monitoring and to auxiliary data channels. The 261 remaining columns represent the useful transported capacity or "payload".

The SDH techniques offers considerable advantage as for:
- flexibility in the management of data transmission structures of different hierarchical level;
- capacity to support centralised management system of the network through data channels present in the SDH frame itself (D type bytes of the section heading fields);
- possibility to carry out checks of signals present in the network separately according to the level they belong to.

The present cross connectors are therefore based on this SDH technique, which application is foreseen in the development from the current telecommunication system to those able to supply broadband services (B-ISDN).

Cross connectors operating in the SDH techniques are therefore in general, large size equipment capable to operate on a large quantity of data transiting at high bit rate.

The bit rate of input and output flows is in fact about 155 Mbit/s and the number of inputs/outputs of each cross connector is often higher than 200.

Due to the delicate character of functions performed by cross connectors based on the SDH technique, problems connected with the check of input and output data integrity and check of the correct operation of devices performing interconnections are of great importance.

Due to this reason each equipment forming the cross connector foresees self-diagnosis devices, often based on the use of cyclic redundancy codes or CRC, able to monitor malfunctions occurred inside the equipment itself.

Furthermore this equipment is often fully duplicated according to the principle of the so-called "hot stand-by", in order to render two alternative, equivalent and completely separated, paths available.

The high speed of data transmission characterising these apparatuses makes however particularly complicate the diagnosis and identification of possible malfunctions.

### Background Art

To try to overcome these problems of check of interconnection correctness, techniques based on assignment of identification label to each STM-1 module present in input flows are known and used.

Making a check on these labels it is possible to monitor if some STM-1 module has been addressed to a different output from the excepted one.

A serious drawback of this solution is to foresee, for its implementation, the use of highly sophisticated and expensive check equipment.

For a standard cross connector (tipically with more than 200 inputs/outputs, 155 Mbit/s each) it is in fact necessary to use a diagnosis computer able to perform label insertion at input and the check of labels at output, often resulting to be more complicated and expensive of the cross connector itself.

In addition, it is often requested to check labels not only for 155 Mbit/s channels, but also the lower hierarchical level structures therein contained, which furtherly complicates check operations through label verification.

This solution also creates considerable communication problems between the cross connector and diagnosis equipment, generally placed at a predetermined distance.

To perform the malfunction diagnosis and the switch operation on the hot stand-by in the required limited times (50 ms approx.), the use of expensive connection buses among input/output devices of the cross connector and control equipment is absolutely necessary.
US 5 265 096 discloses an apparatus for generating SONET alarm in outgoing signal of a telecommunication apparatus, e.g. a network node of telecommunication system. Upon detecting a failure condition at the receiving side of a SONET termination equipment, (i.e. a network alarm), the SONET termination equipment inserts an internal alarm control signal into at least one predetermined transport overhead timeslot (e.g. byte E1).
On the transmitting section, the transmitting SONET termination equipment monitors the predetermined time slot(s) and detects whether an indication of the network alarm control signal has been received. If so, the transmitting SONET termination equipment inserts an appropriate alarm in the predetermined overhead and data timeslots of the outgoing SONET frame signal.
According to the above, the disclosed apparatus is adapted to insert network alarm signal on the receiving termination equipment of a telecommunication equipment and to detect the alarm signal in. the transmitting termination equipment, i.e. the network alarm signal is transported from the receiving termination equipment to transmitting termination equipment of the telecommunication network node.
The disclosed apparatus is therefore adapted to transport a network alarm but is not adapted to detect a failure condition of the node itself, i.e. of the internal stages of the switching matrix (generally a switching matrix is implemented as a time space time matrix with three or five stages).
NK 2000 Network Node - The central processing element for future transmission networks. Philips Telecommunication Review. Vol. 50 (1992) March, No. 1 discloses an interconnection structures of the Synchronous digital hierarchy type. The Network node permit flexible switching of transmission path within a synchronous digital network. This includes automatic switching to standby in the event of a transmission path failure.
As disclosed in paragraph 3.1, the cross connect includes a switching matrix and an individual switching path identification is inserted into the section overhead so that it can be monitored at any time for correct through-connection through the switching matrix. This provides among other things, information on the quality of transmission or a path trace. In the opposite direction, the section overhead coming from the switching matrix is evaluated and than removed. Considering that a 155 Mbit/s system may include No. 63 systems of the 2 Mbit/s type, or No. 3 systems of the 34 Mbit/s type or a single 140 Mbit/s system, the system has a minimum resolution of a 2 Mbit/s systems.
If to each column of the frame is associated an individual path identification, No. 63 switching path identifications are required for monitoring the correct through-connection through the switching matrix and therefore a number of overhead exceeding the available number in the overhead section. This lead to conclude that an extra-overhead is used to transmit the No. 63 required switching path identifications and therefore to operate at a rate exceeding the 155 Mbit/s towards the matrix.
The disclosed network node is therefore adapted to monitor at any time for correct through-connection through the switching matrix, but an extra overhead and an extra rate is required to transport information on the quality of transmission or a path trace.

### Object of the Invention

It is one object of the present invention to implement a method to check data integrity and correctness of interconnections in a cross connector of a digital telecommunication system based on SDH techniques allowing to quickly and effectively diagnose possible malfunctions in the cross connector.

An additional object of this invention is to realize a method not requiring the use of complex and expensive control equipment for its implementation.

### Disclosure of the Invention

- Accordingly these and other objects are achieved by the method to check the integrity of data and the correctness of interconnections in a cross-connector of a digital telecommunication system based on SDH techniques, said cross connector being a distributor of digital data consisting of synchronous transport modules including section heading field and payload fields, said cross connector consisting of a plurality of switching stages, interconnection links of said switching stages and monitoring means adapted to check the correct performance of functions made inside said switching stages, said method including the steps listed in the following claim1.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings in which:
- Figure 1, already described, shows the frame structure of the basic module or level STM-1;
- Figure 2 shows the general structure of a cross connector for a digital telecommunication system operating according to the SDH technique.

### Detailed Description of a Preferred Embodiment

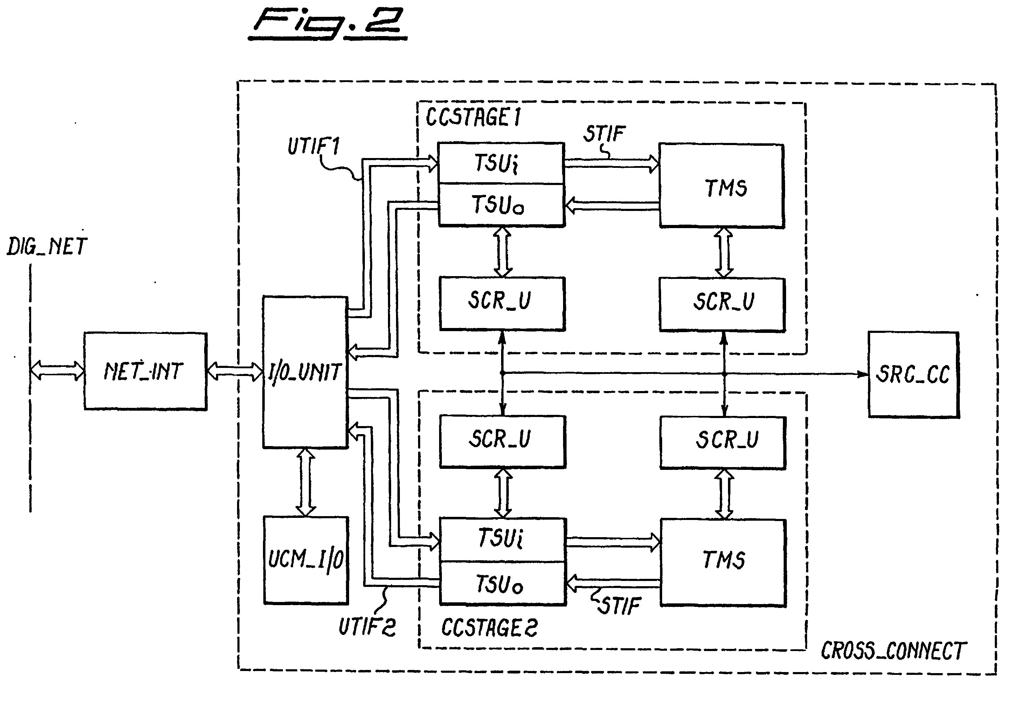

Referring to Fig. 2, a cross connector CROSS_CONNECT includes an input/output unit I/O_UNIT connecting the cross connector CROSS_CONNECT to a digital communication network DIG_NET.

The connection interface NET_INT between the unit I/O_UNIT and the network DIG_NET, generally is an optical type interface.

All synchronous transport modules in the standard format. STM-1 at the cross connector CROSS_CONNECT input/output transit on said interface NET_INT.

The input/output unit I/O_UNIT is controlled by an appropriate control section UCM_I/O.

The cross connector CROSS_CONNECT includes two matrix CCSTAGE1 and CCSTAGE2 identical between them and completely separated one from the other.

The two matrix CCSTAGE 1 and CCSTAGE 2 are connected to the unit I/O_UNIT through the relevant separate interfaces UTIF1 and UTIF2.

Synchronous transport modules transiting on interfaces UTIF1 and UTIF2 are in STM proprietary format.

Generally, interfaces UTIF1 and UTIF2 are electrical type interfaces. The unit I/O_UNIT performs all required conversions between optic signals and electrical signals and all the required conversions between modules in the standard format STM-1 and proprietary format modules.

The two matrix CCSTAGE 1 and CCSTAGE2 operate in parallel and at the same time, in the so-called "active active" operation method, in such a way that each one of them can operate as "hot stand-by" of the other one.

The selection between matrix CCSTAGE1 and CCSTAGE2 to support the system active way is made by the unit I/O_UNIT which selects the way having the higher quality signal.

Each one of the two matrix CCSTAGE1 and CCSTAGE2 includes, according to the SDH technique, a time slot interchange unit and a time slot multiplexing switch.

In particular the time slot interchange unit includes an input time switching unit TSUi representing the first stage of the switching matrix. The second stage of the switching matrix consists of the time slot multiplexing switch TMS and the third stage consists of the output time slot interchange unit TSUo. The switching matrix is therefore of the TST (Time-Space-Time) type.

The time slot interchange unit TSU and the time slot multiplexing switch TMS of a same stage are connected through a STIF interface.

Each one of the TSU and TMS units of the two matrix CCSTAGE 1 and CCASTAGE2 is controlled by a relevant supervision unit SCR_U. Supervision units SCR_U are in their turn connected to the cross connector SRC_CC supervision unit.

Referring to Figures 1 and 2 the method according to the present invention shall be now described.

According to the invention all devices forming TSU and TMS units of the cross connector CROSS_CONNECT of Fig. 2 foresee simple monitoring circuits, checking the correct performance of logic functions made inside the devices themselves.

These functions to be checked consist, for instance in insertion/extraction of data from memories, check of memories, check of combining logic crossing, etc..

These checks are made by said circuits according to check methods such as parity check and checksum of memories.

According to the invention, section heading fields (SOH) of synchronous transport modules include a given number of bits able to contain additional information, one per each one of the 270 columns of the frame.

If a device of the cross connector CROSS_CONNECT detects a parity error on any Byte of the STM module treated by the same, this device sets the additional bits of the SOH heading in such a way to indicate the column this byte belongs to.

In this way an error information is univocally associated to the STM module itself. Furthermore, this information indicates the column, among the 270 columns of the STM module, which the error itself has been associated with.

Devices located downstream the unit which first detected the error, receive the "marked" frame SDH as affected by error at their input.

The heading SOH of this "marked" frame contains the information of the column resulting affected by malfunctions.

Through this information the device downstream the unit which detected the error, generates an error information signalling on the column indicated by said "marked frame" at input.

In this way this device distributes the error information at its inside and detects the new position of this error information at output and identifies the outgoing frame in which it was included.

Thanks to this fact the error information is distributed through all the cross connector CROSS_CONNECT devices treating the STM module after the device inside which the error occurred.

This is valid irrespective of the information flow which the STM module belongs to and regardless the output toward which the module itself has to be addressed.

The unit I/O_UNIT analyses the SOH heading of said STM modules in proprietary format transiting and decides, according to the number of modules with an error information associated, to switch on the stand-by path.

This allows to assure the correct operation of the cross connector CROSS_CONNECT even while repair operations on the stage containing the malfunctioning device are performed.

Advantage of the invention are evident.

Thanks to such a method, error signalling is made using, without any additional cost, control circuits already present inside the different equipment forming the cross connector CROSS_CONNECT.

Insertion of the error information inside the module STM heading allows to distribute the error signal up to the unit I/O_UNIT of the cross connector CROSS_CONNECT without adding any hardware equipment and without additional software operations.

This error signal is updated very frequently since the block structure STM repeats every 125 µs. Monitoring of the cross-connector CROSS-CONNECT results permanent and spread over all cross connected columns.

The propagation frequency of error signals depends on the number of bytes kept to this purpose in the SOH heading of the SDH frame in the proprietary format.

For instance, using 34 bytes of the SOH heading it is possible to propagate error signals relevant to the 270 columns with frame frequency, that is every 125 µs.

According to a preferred embodiment of the invention, 9 bytes of the SOH heading are used. Consequently error signals are transferred each 4 SDH frames, that is every 500 µs.

The switching operation of the stand-by path is made very quickly.

Equipment required for the extraction of the error signal contained in the SOH heading of the STM module are very simple and not expensive. They can even be based on simple combinatorial networks.

While a particular embodiment of the present invention has been shown and described, it should be understood that the present invention is not limited thereto since other embodiments may be made by those skilled in the art.. It is thus contemplated that the present invention encompasses any and all such embodiments covered by the following claims.

## Claims

1. Method to check the integrity of data and the correctness of interconnections in a cross-connector of a digital telecommunication system based on SDH techniques, said cross connector (CROSS_CONNECT) being a distributor of digital data consisting of synchronous transport modules STM including section heading field (SOH) and payload fields, said cross connector (CROSS_CONNECT) consisting of a plurality of switching stages (TSUi, TMS, TSUo), interconnection links (STIF) of said switching stages and monitoring means (SCR_U, SRC_U) adapted to check the correct performance of functions made inside said switching stages (TSUi, TMS, TSUo), said method including the steps of:
• checking through said monitoring means (SCR_U, SRC_U) the occurred introduction of errors in said synchronous transport modules STM by a predetermined switching stage (TSUi, TMS, TSUo);
• inserting, if an error introduced in one of the synchronous transport modules STM by one of said devices is monitored, an error information signalling relevant to such error inside predetermined fields among said section heading fields (SOH) of said synchronous transport module STM indicating the column the errored byte belongs to;
• transmitting said synchronous transport modules STM containing said error information signalling on said interconnection links (STIF) connecting said predetermined switching stage to the following switching stage,
method **characterized in that**:
• detecting at the input of the switching stage (TSUi, TMS, TSUo) placed downstream said switching stage (TSUi, TMS, TSUo) which introduced said error said information signalling, and in each one of the bytes belonging to the errored column, forcing an error;
• detecting at the output of the switching stage (TSUi, TMS, TSUo) placed downstream said switching stage (TSUi, TMS, TSUo) which introduced said error said forced error and inserting an error information signalling relevant to such error inside predetermined fields among said section heading fields (SOH) of said synchronous transport module STM indicating the column the errored byte belongs to.

2. Method according to claim 1, **characterized in that** said checking operation is performed by means of a parity check on data coming out from said switching stage.

3. Method according to claim 1 and 2, **characterized in that** said checking operation is performed by means of check-sum of data coming out from said switching stage.

4. Method according to claim 1, in which the frame structure of said synchronous transport modules STM consists of 9-line 270-column matrix (STM-1) of digital shaped information elements, **characterized by** the fact that said error information signalling includes an indication of the column number among said 270 columns in which the error was introduced.

5. Method according to claim 1, in which said cross connector (CROSS_CONNECT) includes several distribution matrixes (CCSTAGE1, CCSTAGE2) completely independent among them and operating in parallel, **characterized by** the fact to include the following steps:
- for each one of the synchronous transport modules STM outgoing from each one of said distribution matrixes (CCSTAGE1, CCSTAGE2) of said cross connector (CROSS_CONNECT), check the presence of said appropriate fields among said section heading fields (SOH); and
- to select one of the alternative transmission paths offered by said distribution matrixes (CCSTAGE1, CCSTAGE2) according to the presence of said error information signalling in said synchronous transport modules at output of said distribution matrixes (CCSTAGE1, CCSTAGE2).

6. Method according to claim 1, **characterized by** the fact that said error information signalling is contained in 34 bytes of said section heading (SOH) of said synchronous transport module STM.

7. Method according to claim 1, **characterized by** the fact that said error information signalling is contained in 9 bytes of said section heading (SOH) of said synchronous transport module STM.

## Patentansprüche

1. Methode zum Prüfen der Integrität von Daten und der Korrektheit von Zusammenschaltungen in einem Kreuzverbinder eines digitalen Telekommunikationssystems, das auf SDH-Techniken basiert, wobei genannter Kreuzverbinder (CROSS_CONNECT) ein Verteiler von digitalen Daten ist, der aus synchronen Transportmodulen STM besteht, einschließlich Kennsatz-Felder des Abschnittes (SOH) und Nutzlast-Felder, und genannter Kreuzverbinder (CROSS_CONNECT) aus einer Mehrzahl von Vermittlungsabschnitten (TSUi, TMS, TSUo), Gliedem zur Zusammenschaltung (STIF) von genannten Vermittlungsabschnitten und Überwachungsmitteln (SCR_U, SRC_U) besteht, die dazu geeignet sind, die korrekte Leistung von Funktionen innerhalb der genannten Vermittlungsabschnitte (TSUi, TMS, TSUo) zu überprüfen, wobei genannte Methode die folgenden Schritte umfaßt:
• das Prüfen, durch genannte Überwachungsmittel (SCR_U, SRC_U), der erfolgten Einführung von Fehlem in genannte synchrone Transportmodule STM durch einen vorbestimmten Vermittlungsabschnitt (TSUi, TMS, TSUo);
• das Schalten, wenn ein eingeführter Fehler in einem der synchronen Transportmodule STM durch eine der genannten Vorrichtungen ermittelt wird, einer Fehlermeldung bezüglich dieses Fehlers innerhalb vorbestimmter Felder unter genannten Kennsatz-Feldern des Abschnittes (SOH) von genanntem synchronem Transportmodul STM, unter Hinweis auf die Spalte, zu welcher das fehlerharte Byte gehört;
• das Übertragen genannter synchroner Transportmodule STM, die genannte Fehlermeldung enthalten, auf das genannte Zusammenschaltungsglied (STIF), wobei die genannte vorbestimmte Vermittlungsebene mit der nachfolgenden Vermittlungsebene verbunden wird.
Die Methode ist **gekennzeichnet:**
• **durch** das Ermitteln in der Eingabe des Vermittlungsabschnittes (TSUi, TMS, TSUo) unterhalb des genannten Vermittlungsabschnittes (TSUi, TMS, TSUo), welcher die Information des genannten Fehlers einführte, und in jedem der Bytes, die zu der fehlerhaften Spalte gehören, indem ein Fehler erzwungen wird;
• **durch** das Ermitteln in der Ausgabe des Vermittlungsabschnittes (TSUi, TMS, TSUo) unterhalb des genannten Vermittlungsabschnittes (TSUi, TMS, TSUo), welcher genannten Fehler des erzwungenen Fehlers einführte und durch Einschalten einer Fehlermeldung bezüglich eines solchen Fehlers innerhalb der vorbestimmten Felder unter genannten Kennsatz-Feldern des Abschnittes (SOH) des genannten synchronen Transportmoduls STM, unter Hinweis auf die Spalte, zu welcher das fehlerhafte Byte gehört.

2. Methode laut Anspruch 1, **dadurch gekennzeichnet, daß** genannte Prüfoperation mittels einer Paritätsprüfung bei Daten erfolgt, die aus genanntem Vermittlungsabschnitt kommen.

3. Methode laut Anspruch 1 und 2, **dadurch gekennzeichnet, daß** genannte Prüfoperation mittels Prüfsumme von Daten erfolgt, die aus genanntem Vermittlungsabschnitt kommen.

4. Methode laut Anspruch 1, in welcher die Rahmenstruktur von genannten synchronen Transportmodulen STM aus einer 9-Zeilen und 270-Spalten Matrix (STM-1) von digital-förmigen Informationselementen besteht, ist **dadurch gekennzeichnet, daß** genannte Fehlermeldung einen Hinweis auf die Spaltenzahl unter genannten 270 Spalten enthält, in die der Fehler eingeschaltet worden ist.

5. Methode laut Anspruch 1, in welcher genannter Kreuzverbinder (CROSS_CONNECT) verschiedene Verteilungsmatrizen umfaßt (CCSTAGE1, CCSTAGE2), die völlig unabhängig voneinander sind und parallel zueinander arbeiten, **dadurch gekennzeichnet, daß** sie folgende Schritte umfaßt:
- für jedes der synchronen Transportmodule STM, das aus jedem der genannten Verteilungsmatrizen (CCSTAGE1, CCSTAGE2) des genannten Kreuzverbinders (CROSS_CONNECT) kommt, wird das Vorhandensein von genannten geeigneten Feldern unter genannten Kennsatz-Feldem des Abschnittes (SOH) geprüft; und
- es wird einer der alternativen Übertragungspfade gewählt, den genannte Verteilungsmatrizen (CCSTAGE1, CCSTAGE2) anbieten, und zwar gemäß Vorhandensein von genannter Fehlermeldung in genannten synchronen Transportmodulen in der Ausgabe genannter Verteilungsmatrizen (CCSTAGE1, CCSTAGE2).

6. Methode laut Anspruch 1, **dadurch gekennzeichnet, daß** genannte Fehlermeldung in 34 Bytes des genannten Kopfteils des Abschnittes (SOH) des genannten synchronen Transportmoduls STM enthalten ist.

7. Methode laut Anspruch 1, **dadurch gekennzeichnet, daß** genannte Fehlermeldung in 9 Bytes des genannten Kopfteils des Abschnittes (SOH) des genannten synchronen Transportmoduls STM enthalten ist.

## Revendications

1. Méthode de vérifier l'intégrité des données et l'exactitude des interconnexions dans un connecteur-croisé d'un système de télécommunication digitale basé sur les techniques SDH, ledit connecteur-croisé (CROSS_CONNECT) étant un distributeur de données digitales constitué par des modules STM de transport synchrone comprenant le champ de l'en-tête de section (SOH) et les champs de la charge, ledit connecteur croisé (CROSS_CONNECT) étant constitué par une pluralité de niveaux de commutation (TSUi, TMS, TSUo), de liens d'interconnexion (STIF) desdits niveaux de commutation et de moyens de surveillance permanente (SCR_U, SRC_U) adaptés pour vérifier la bonne performance des fonctions effectuées à l'intérieur desdits niveaux de commutation (TSUi, TMS, TSUo), ladite méthode comprend les étapes suivantes:
• vérification à travers lesdits moyens de surveillance continue (SCR_U, SRC_U) de l'introduction effectuée des erreurs dans lesdits modules STM de transport synchrone par un niveau prédéterminé de commutation (TSUi, TMS, TSUo);
• connexion, si une erreur introduite dans un des modules STM de transport synchrone par un desdits appareils est détectée, une signalisation d'information d'erreur relative à cette erreur à l'intérieur de champs prédéterminés parmi les champs SOH de l'en-tête de ladite section dudit module STM de transport synchrone en indiquant la colonne à laquelle appartient l'octet en erreur,
• transmission desdits modules STM de transport synchrone contenant la signalisation de ladite information d'erreur sur les liens d'interconnexion (STIF) connectant ledit niveau de commutation prédéterminé au niveau successif de commutation,
méthode caractérisée en cela que:
• la détection à l'entrée du niveau de commutation (TSUi, TMS, TSUo) placé en aval dudit niveau de commutation (TSUi, TMS, TSUo) qui a introduit la signalisation de l'information de ladite erreur, et dans chacun des octets appartenant à la colonne en erreur, en forçant une erreur;
• la détection à la sortie du niveau de commutation (TSUi, TMS, TSUo) placé en aval dudit niveau de commutation (TSUi, TMS, TSUo) qui a introduit ladite erreur de l'erreur forcée et en connectant une signalisation d'information d'erreur relative à une telle erreur à l'intérieur de champs prédéterminés parmi les champs d'en-tête de ladite section (SOH) dudit module STM de transport synchrone indiquant la colonne à laquelle l'octet en erreur appartient.

2. Méthode conforme à la demande 1, caractérisée en cela que ladite opération de vérification est effectuée au moyen d'une vérification d'égalité sur les données en provenance dudit niveau de commutation.

3. Méthode conforme aux demandes 1 et 2, caractérisée en cela que ladite opération de vérification est effectuée au moyen de la somme des vérifications des données en provenance dudit niveau de commutation.

4. Méthode conforme à la demande 1, dans laquelle la structure du châssis desdits modules STM de transport synchrone constitué par une matrice de 9 lignes et 270 colonnes (STM-1) d'éléments d'information mis sous forme digitale, **caractérisés par le fait que** la signalisation de l'information d'erreur comprend une indication du numéro de colonne parmi lesdites 270 colonnes dans laquelle l'erreur a été introduite.

5. Méthode conforme à la demande 1, dans laquelle ledit connecteur croisé (CROSS_CONNECT) comprend plusieurs matrices de distribution (CCSTAGE1, CCSTAGE2) complètement indépendantes les unes des autres et fonctionnant en parallèle, **caractérisées par** le fait de comprendre les étapes suivantes:
- pour chacun des modules STM de transport synchrone sortant de chacune desdites matrices de distribution (CCSTAGE1, CCSTAGE2) dudit connecteur croisé (CROSS_CONNECT), vérification de la présence desdits champs appropriés parmi lesdits champs d'en-tête de section (SOH); et
- sélection d'un des cheminenements alternatifs de transmission offerts par lesdites matrices de distribution (CCSTAGE1, CCSTAGE2) en fonction de la présence de signalisation d'information de ladite erreur dans les modules de transport synchrone à la sortie desdites matrices de distribution (CCSTAGE1, CCSTAGE2).

6. Méthode conforme à la demande 1, **caractérisée par le fait que** la signalisation de l'information de ladite erreur est contenue dans 34 octets de ladite en-tête de section (SOH) dudit module STM de transport synchrone.

7. Méthode conforme à la demande 1, **caractérisée par le fait que** la signalisation de l'information de ladite erreur est contenue dans 9 octets de l'en-tête de ladite section (SOH) desdits modules STM de transport synchrone.
